# EUROPÄISCHE PATENTSCHRIFT

(11) **EP 1 281 111 B1**
(45) Veröffentlichungstag und Bekanntmachung des Hinweises auf die Patenterteilung: **18.02.2004**
(21) Anmeldenummer: 01947262.0
(22) Anmeldetag: 07.05.2001
(51) Int. Cl.: G05G 15/00

(54) **BETÄTIGUNGSVORRICHTUNG**
ACTUATING DEVICE
DISPOSITIF D'ACTIONNEMENT

(30) Priorität: 11.05.2000 DE 20008415 U
(43) Veröffentlichungstag der Anmeldung: 05.02.2003
(73) Patentinhaber: Cooper Cameron Corporation, Houston, Texas 77027-9109 (US)
(72) Erfinder: BIESTER, Klaus, 29342 Wienhausen (DE); LENZ, Norbert, 29229 Celle (DE)
(74) Vertreter: Grünecker, Kinkeldey, Stockmair & Schwanhäusser Anwaltssozietät
(86) Internationale Anmeldenummer: PCT/EP2001/005156
(87) Internationale Veröffentlichungsnummer: WO 2001/086370

(56) Entgegenhaltungen:
- EP-A- 1 024 422
- WO-A-98/30816
- US-A- 5 195 721

## Beschreibung

Die Erfindung betrifft eine Betätigungsvorrichtung zur Verstellung einer entgegengesetzt zur Verstellrichtung kraftbeaufschlagten Steuereinrichtung, wobei die Betätigungsvorrichtung ein in einem Vorrichtungsgehäuse durch eine Drehspindel einer Vorschubeinrichtung in Verstellrichtung axial verschiebbares Betätigungselement aufweist, welche Drehspindel mit einer in dem Vorrichtungsgehäuse drehbar gelagerten und die Drehspindel umgebenden Drehhülse drehfest verbunden ist, welche relativ zu einem mit dem Gehäuse drehfest verbundenen Ringflansch mittels einer Wickelfeder entgegengesetzt zu einer Vorschubdrehrichtung der Drehspindel festgelegt ist, wobei der Wickelfeder eine Notlöseeinrichtung zur Rückstellung des Betätigungselements entgegengesetzt zur Verstellrichtung zugeordnet ist.

Eine solche Betätigungsvorrichtung ist aus der Praxis bekannt, wobei die Betätigungsvorrichtung Steuereinrichtungen, wie Ventile, Drosseleinrichtungen und andere Steuermechanismen insbesondere zur Verwendung für maritime Öl- oder Gaserzeugungssysteme verstellt. Es ist selbstverständlich, dass die Betätigungsvorrichtung dabei auch für entsprechende terrestrische schwer zugängliche oder entfernte Lokalitäten einsetzbar ist.

Bei Verstellung der Verstelleinrichtung entgegengesetzt zur Kraftbeaufschlagung wird das Betätigungselement axial verschoben und dient beispielsweise in seiner ausgeschobenen Vorschubstellung zur Verstellung der Steuereinrichtung in ihre Einsatzbereitschaft. Wird das Betätigungselement entgegengesetzt zur Verstellrichtung zurückbewegt, wird die Steuereinrichtung inaktiv geschaltet. Eine solche Betätigungsvorrichtung weist ein entsprechendes Vorrichtungsgehäuse auf, um Schutz gegen über Einflüssen im maritimen oder terrestrischen Einsatzbereich der Vorrichtung zu bieten. Das Betätigungselement wird durch Drehen einer Drehspindel verschoben, die drehfest mit einer sie umgebenden Drehhülse verbunden ist. Diese Drehhülse ist relativ zu einem mit dem Vorrichtungsgehäuse drehfest verbundenen Ringflansch mittels einer Wickelfeder entgegengesetzt zur Vorschubdrehrichtung der Drehspindel festgelegt. Dadurch ist gewährleistet, dass zwar eine Drehung der Drehspindel in Vorschubdrehrichtung ohne Behinderung durch die Wickelfeder zum Ausschieben des Betätigungselements möglich ist, gleichzeitig allerdings ein selbsttätiges Einschieben des Betätigungselements in das Vorrichtungsgehäuse durch die Kraftbeaufschlagung in der Steuereinrichtung entgegengesetzt zur Verstellrichtung durch die Wickelfeder verhindert ist. Dadurch wird beispielsweise eine entsprechende Belastung der Vorschubeinrichtung verhindert und vom Vorrichtungsgehäuse aufgenommen.

Um allerdings bei einem Stromausfall oder dergleichen eine selbsttätige Rückstellung des Betätigungselements zum Schließen der Steuereinrichtung zu ermöglichen, ist der Wickelfeder eine Notlöseeinrichtung zugeordnet, durch die die Wickelfeder soweit gelöst wird, dass die Drehhülse relativ zum Ringflansch drehbar ist und entsprechend die mit der Drehhülse drehfest verbundene Drehspindel sich entgegengesetzt zur Vorschubdrehrichtung drehen kann und entsprechend durch das Betätigungselement entgegengesetzt zur Verstellrichtung bewegt wird.

Bei der vorbekannten Betätigungsvorrichtung ist die Notauslöseeinrichtung außen am Vorrichtungsgehäuse angebracht, wobei sie aus einem Elektromagneten mit in das Vorrichtungsgehäuse vorstehendem Stößel gebildet ist. Der Stößel ist vom Ende der Wickelfeder entfernt, wodurch diese Drehhülse und Ringflansch drehfest miteinander verbindet. Bei Stromausfall wird der Stößel durch Federbeaufschlagung gegen das Ende der Wickelfeder bewegt, so dass diese sich lösen kann. Insgesamt ist der Aufbau dieser Betätigungsvorrichtung relativ komplex, wobei die Wickelfeder in ihrer Aufspannung auf Drehhülse und Ringflansch schlecht oder gar nicht einstellbar ist.

WO-A-98/30816 offenbart als nächstliegenden Stand der Technik eine lineare Betätigungseinrichtung bei der ein elektrischer Motor eine Schnecke antreibt, die mit einem Übertragungsrad verbunden ist, das um eine Welle dreht. Das Übertragungsrad ist in Eingriff mit einem Sonnenrad, das ein Planetengetriebe mit Planetenrädern antreibt, die mit einem Kupplungsteil verbunden sind. Ein Hohlrad ist ebenfalls auf einer Innenseite eines Rohrabschnitts vorgesehen, welcher in einem Gehäuse drehbar angeordnet ist.

Eine Bremsfeder ist um den Rohrabschnitt gewunden und am Gehäuse gesichert. Eine Freigabeeinrichtung ist der Bremsfeder zugeordnet, wobei die Bremsfeder durch Betätigen einer Justierstange freigegeben werden kann, welche mit einem Teilelement verbunden ist. Wird eine Kolbenstange, die durch eine Gewindemutter verstellbar ist, die auf einer Spindelwelle angeordnet ist, in eine rückgezogene Stellung aus einem bestimmten Grund verschoben, wird die Bremsfeder durch die Freigabeeinrichtung gelöst, und wenn der Rohrabschnitt frei ist, findet eine entsprechende Drehung statt. Bezüglich der Spindel ist noch zu beachten, dass diese drehfest bezüglich einer Drehhülse ist, die an einem Ringflansch durch eine Kupplungsfeder fixiert ist.

Der Erfindung liegt die Aufgabe zugrunde, die eingangs beschriebene Betätigungsvorrichtung dahingehend zu verbessern, dass diese einen kompakteren und einfacheren Aufbau aufweist und gleichzeitig die Wickelfederaufwicklung bezüglich der Drehfestigkeit der Verbindung von Drehhülse und Ringflansch einfach und genau einstellbar ist.

Diese Aufgabe wird im Zusammenhang mit den Merkmalen des Oberbegriffs des Anspruchs 1 dadurch gelöst, dass die Notauslöseeinrichtung eine zwischen einer Spann- und einer Entspannstellung verdrehbare, in Richtung ihrer Entspannstellung kraftbeaufschlagte Spannhülse für die Wickelfeder aufweist, die in Spannstellung lösbar gehalten ist.

In der Entspannstellung ist die Wickelfeder so weit gelöst, dass eine Verdrehung der Drehhülse relativ zum Ringflansch und damit eine Drehung der Drehspindel entgegengesetzt zur Vorschubdrehrichtung möglich ist. Bei Verdrehen der Spannhülse aus der Entspannstellung kann die Verdrehung der Drehhülse zum Ringflansch durch die Schlingkraft der Wickelfeder verhindert werden. Außerdem ist in der Regel die Spannhülse innerhalb des Vorrichtungsgehäuses angeordnet, so dass keine Teile der Notauslöseeinrichtung nach außen von der Gehäusevorrichtung abstehen. Dadurch ist die Notauslöseeinrichtung in weitaus geringerem Maße für Beschädigungen oder dergleichen anfällig.

Um die Drehspindel in Vorschubdrehrichtung bewegen zu können, kann die Vorschubeinrichtung einen elektrischen Motor aufweisen. Ein solcher Motor kann beispielsweise ein Servogleichspannungsmotor sein.

Es besteht die Möglichkeit, dass der elektrische Motor die Drehspindel direkt antreibt. Um eine Vorschubeinrichtung mit hoher Drehmomentübertragung zu erhalten, kann die Drehspindel als Kugelumlaufspindel ausgebildet und der elektrische Motor mit einer Kugelmutter antriebsverbunden sein, in welcher die Kugelumlaufspindel gelagert ist.

Um die Drehgeschwindigkeit des elektrischen Motors entsprechend in Umdrehungen der Drehspindel umsetzen zu können, kann zwischen elektrischem Motor und Kugelmutter eine Getriebeeinrichtung angeordnet sein. Eine solche Getriebeeinrichtung kann eine Standard-Kupplung-Brems-Kombination oder auch ein sogenanntes Flex-Spline-Getriebe sein, das keine klassischen Zahnräder beinhaltet.

Um elektrischen Motor und Getriebeeinrichtung einfacher handhaben und befestigen zu können, können diese eine an einer quer zum Vorrichtungsgehäuse in diesem befestigten Ringscheibe insbesondere lösbar befestigte Motor-Getriebe-Einheit bilden.

Zur besseren Lagerung der Drehspindel und/oder der Kugelmutter kann die Ringscheibe auf ihrer der Kugelmutter zuweisenden Seite einen Ringfortsatz aufweisen, in dem eine Verbindungshülse drehbar gelagert ist. Diese ist an einem ihrer Enden mit der Motor-Getriebe-Einheit und an ihrem anderen Ende mit der Kugelmutter insbesondere lösbar verbunden. In der Verbindungshülse dreht sich die Drehspindel, wobei diese drehbar in der Verbindungshülse gelagert oder frei zu dieser drehbar sein kann. Die Verbindungshülse wird von der Motor-Getriebe-Einheit gedreht und diese Drehung auf die Kugelmutter übertragen, wodurch sich die Drehspindel relativ zur Kugelmutter in Vorschubdrehrichtung oder entgegengesetzt zu dieser Richtung dreht.

Um eine Drehung der Verbindungshülse nur in Vorschubdrehrichtung der Drehspindel zuzulassen, und gleichzeitig ein entsprechendes auf die Drehspindel ausgeübtes Rückdrehmoment über das gesamte Vorrichtungsgehäuse abzufangen, kann zwischen Verbindungshülse und Ringfortsatz eine weitere Wickelfeder angeordnet sein.

Um in einfacher Weise die Position des Betätigungselements und entsprechend der Drehspindel feststellen zu können, kann der Vorschubeinrichtung, insbesondere dem elektrischen Motor, ein Positionssensor zugeordnet sein. Dieser erfasst beispielsweise entsprechende Längspositionen der Drehspindel und bestimmt daraus die Position des Betätigungselements. Es ist ebenfalls möglich, den Vorschubweg des Betätigungselements direkt durch einen entsprechenden Positionssensor im Motor zu ermitteln. Analoges gilt für die Rückdrehung der Drehspindel und damit die Rückstellung des Betätigungselements.

Um die weitere Wickelfeder vor äußeren Einflüssen zu schützen und/oder Verbindungshülse und Kugelmutter in insbesondere radialer und axialer Richtung zu lagern, kann eine Mantelhülse Ringfortsatz und Verbindungshülse umgeben und an der Ringscheibe lösbar befestigt sein. Die Mantelhülse ist durch die Verbindung mit der Ringscheibe drehfest zum Vorrichtungsgehäuse angeordnet.

Um die Drehspindel im Bereich zwischen Kugelmutter und Betätigungselement sicher zu führen, kann die Drehhülse sich von im wesentlichen der Kugelmutter bis zum dem elektrischen Motor gegenüberliegenden Auslassende des Vorrichtungsgehäuses erstrecken, wobei wenigstens zwei Führungsschlitze in der Führungshülse ausgebildet sind, in denen relativ zur Drehspindel radial abstehende Führungsfahnen in axialer Richtung verschiebbar sind. Durch den Eingriff der Führungsfahnen in die entsprechenden Führungsschlitze sind Drehhülse und Drehspindel drehfest miteinander verbunden. Das heißt, bei Drehung der Drehspindel beispielsweise in Vorschubdrehrichtung bleibt die Drehhülse stehen. Dabei wird die Führungshülse durch die Schlingfeder festgehalten, beziehungsweise gegen Verdrehen gesichert. Die Drehhülse ist relativ zu dem Vorrichtungsgehäuse über entsprechende Lager drehbar gelagert.

Um standardmäßige Drehspindeln bzw. Kugelumlaufspindeln verwenden zu können, können die Führungsfahnen an einem an einem Ende der Drehspindel lösbar befestigten Spindelkopf angeordnet sein. Der Spindelkopf wird beispielsweise auf dieses Ende der Drehspindel aufgeschraubt und somit drehfest relativ zur Drehspindel mit dieser verbunden.

Um eine Drehung der Drehspindel und auch des Spindelkopfes in eine axiale Bewegung des Betätigungselement in einfacher Weise umsetzen zu können, kann der Spindelkopf auf seiner der Drehspindel abgewandten Seite eine Drehhalterung für ein Ende des Betätigungselements aufweisen. Durch diese Drehhalterung sind Betätigungselement und Drehspindel relativ zueinander verdrehbar, wobei in der Regel das Betätigungselement keine Drehung durchführt und nur axial in Vorschubrichtung oder in entgegengesetzter Richtung bewegt wird.

Bei einem einfachen Ausführungsbeispiel können Führungshülse und Mantelhülse aufeinander zuweisende Endabschnitte mit im wesentlichen gleichem Außendurchmesser aufweisen, auf denen die Wickelfeder aufgewickelt ist.

Um die Wickelfeder herum erstreckt sich dabei die Spannhülse, die in Abhängigkeit von ihrer Drehstellung die Wickelfeder öffnen oder schließen lässt.

Um das Vorrichtungsgehäuse in einfacher Weise an zumindest dem Ende zu verschließen, aus dem das Betätigungselement ausschiebbar ist, kann ein Gehäusedeckel mit einer Führungsbohrung für das Betätigungselement am Auslassende des Gehäuses angeordnet sein. Der Gehäusedeckel kann auf oder in das Vorrichtungsgehäuse auf- bzw. einschraubbar ausgebildet sein. Weiterhin kann der Vorrichtungsdeckel durch entsprechende andere Maßnahmen, wie Schrauben oder dergleichen, am Vorrichtungsgehäuse lösbar befestigt werden.

Um ein dem Gehäusedeckel zugeordnetes Ende der Führungshülse einfacher lagern zu können, kann der Gehäusedeckel zumindest eine in das Gehäuse vorstehende Einsteckhülse aufweisen, die die Führungshülse umgibt und an welcher die Führungshülse drehbar gelagert ist.

Ein besonders kompakter Aufbau der Notauslöseeinrichtung ergibt sich, wenn beispielsweise an Außenseiten von Mantelhülse und Einsteckhülse die Spannhülse drehbar gelagert ist.

Die Spannhülse kann über ein entsprechendes Getriebe mit gegebenenfalls einer Kupplung mit dem elektrischen Motor für die Drehspindel bzw. Kugelmutter verbunden sein. Um eine relativ unabhängige und genaue Drehung der Spannhülse zu ermöglichen, kann die Spannhülse mittels eines elektrischen Spannmotors, insbesondere eines Schrittmotors, drehbar sein.

Um bei Verdrehung der Spannhülse in einfacher Weise die Umschlingung von Führungshülse und Mantelhülse in den entsprechenden Bereichen mehr oder weniger fest zu gestalten, kann eine Mitnehmereinrichtung an insbesondere der Innenseite der Drehhülse ausgebildet sein, die mit einem Wickelende der Wickelfeder in Kontakt ist. Durch die Mitnehmereinrichtung wird das Wickelende je nach Drehung der Spannhülse geöffnet. Die Wickelfeder erzeugt entgegen gesetzt zur Öffnungsrichtung durch die Eigenfederkraft die reibschlüssige Blockierung.

Um die erfindungsgemäße Betätigungsvorrichtung besonders kompakt zu gestalten, kann der Spannmotor im Gehäuse seitlich neben der Mantelhülse angeordnet sein.

Solange der Spannmotor mit elektrischer Energie versorgt wird, übt er ein Haltemoment auf die Spannhülse aus, dem die Kraftbeaufschlagung der Spannhülse in Entspannstellung entgegenwirkt. Fällt die elektrische Versorgung aus oder wird die elektrische Versorgung abgebaut, dreht sich der Spannmotor und insbesondere die Spannhülse durch die Federkraft in Richtung Entspannstellung. Bei einem einfachen Ausführungsbeispiel kann zur Kraftbeaufschlagung der Spannhülse in Richtung Entspannstellung zwischen Spannhülse und Gehäuse oder einem relativ zum Gehäuse drehfesten Bauteil eine Rückstellfeder angeordnet sein. Diese wird bei Verdrehung der Spannhülse aus ihrer Entspannstellung gespannt, wobei die in der Rückstellfeder gespeicherte Energie zur Rückstellung der Spannhülse in ihrer Entspannstellung nutzbar ist. Es sei angemerkt, dass die Rückstellfeder sowohl für ein Notschließen als auch für ein normales Schließen bzw. zum Rückstellen der Spannhülse mit Lösen der Wickelfeder eingesetzt wird.

Im einfachsten Fall kann das drehfeste Bauteil in diesem Zusammenhang der Gehäusedeckel und insbesondere die Einsteckhülse sein.

Um die Rückstellfeder ebenfalls mittels der Spannhülse zu spannen, kann eine weitere Mitnehmereinrichtung von der Innenseite der Spannhülse im wesentlichen radial nach innen abstehen, die mit einem Wickelende der als Torsionsfeder ausgebildeten Rückstellfeder in Kontakt ist. Insbesondere das entsprechend andere Ende der Wickelfeder ist am drehfesten Bauteil festgelegt.

Um das Betätigungselement zumindest teilweise entlang der Vorschubbewegung zu umgeben, kann der Gehäusedeckel eine der Einsteckhülse gegenüberliegende Außenhülse aufweisen, die das Betätigungselement umgibt.

Um ein Eindringen von Wasser, Schmutz oder dergleichen in die Außenhülse zu verhindern, kann diese an ihrem freien Ende einen insbesondere lösbaren Enddeckel mit Auslassbohrung für das im wesentlichen stabförmige Betätigungselement aufweisen. Das Betätigungselement kann eckigen oder runden Querschnitt aufweisen.

Um eine Bewegung des Betätigungselements zu dämpfen, kann die Außenhülse mit einem Fluid zumindest teilweise gefüllt sein und vom Betätigungselement wenigstens ein Verdrängelement innerhalb der Außenhülse abstehen.

Ein besonders wirkungsvolles und dabei einfaches Verdrängungselement kann darin gesehen werden, wenn dieses als radial auswärts vom Betätigungselement abstehende Verdrängerscheibe mit wenigstens einer Fluiddurchlassbohrung ausgebildet ist.

Zur einfacheren Wartung und Zugänglichkeit der Betätigungsvorrichtung kann das Gehäuse aus wenigstens zwei miteinander lösbar verbundenen Gehäuseteilen zusammengesetzt sein. Um in diesem Zusammenhang beispielsweise die Motor-Getriebe-Einheit auswechseln oder in einfacher Weise reparieren zu können, kann ein Gehäuseteil im wesentlichen als Gehäuseendkörper ausgebildet sein, in der die Motor-Getriebe-Einheit enthalten ist.

Eine einfache Befestigungsmöglichkeit der erfindungsgemäßen Betätigungsvorrichtung an einer entsprechenden Steuereinrichtung ergibt sich beispielsweise dadurch, dass eine Befestigungseinrichtung direkt an einer Außenseite des Gehäuses im Bereich des Gehäusedeckels zur lösbaren Befestigung an der Steuereinrichtung angeordnet ist.

Im folgenden werden vorteilhafte Ausführungsbeispiele der Erfindung anhand einer Zeichnung beigefügten Figuren näher erläutert und beschrieben.

Es zeigen:
- Fig. 1: einen Längsschnitt durch die erfindungsgemäße Betätigungsvorrichtung mit angeschlossener Steuereinrichtung;
- Fig. 2: einen Längsschnitt durch die Betätigungsvorrichtung nach Figur 1 bzw. entlang der Schnittlinie II-II aus Figur 3;
- Fig. 3: eine Vorderansicht der Betätigungsvorrichtung nach Figur 2;
- Fig. 4: ein Schnitt entlang der Linie IV-IV aus Figur 3;
- Fig. 5: eine Vorderansicht analog zu Figur 3 eines zweiten Ausführungsbeispiels einer erfindungsgemäßen Betätigungsvorrichtung, und
- Fig. 6: ein Schnitt entlang der Linie VI-VI aus Figur 5.

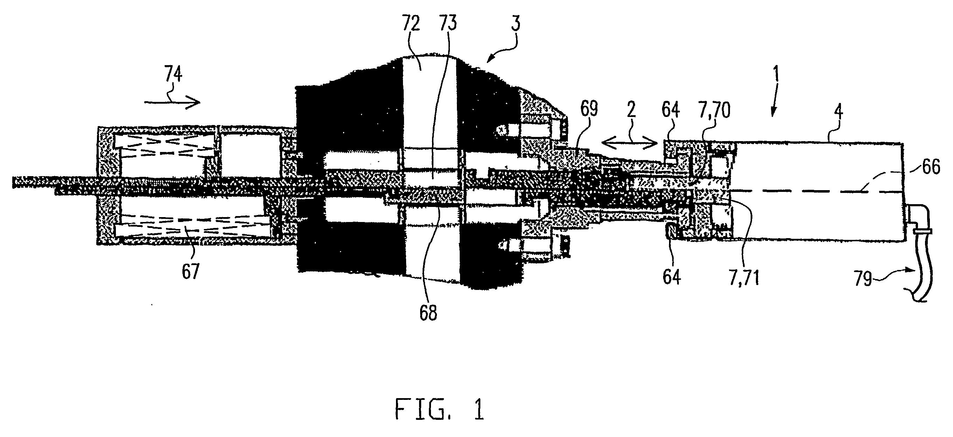

In Figur 1 ist ein Schnitt durch eine erfindungsgemäße Betätigungsvorrichtung 1 dargestellt, die seitlich an einer Steuereinrichtung 3 in Form eines Ventils angeflanscht ist. Die Betätigungsvorrichtung 1 weist ein Vorrichtungsgehäuse 4 auf, in dem in axialer Richtung 66 ein Betätigungselement 7 zwischen einer Ausschubstellung 70 und einer Einziehstellung 71 verschiebar gelagert ist. Das Betätigungselement 7 ist an dem der Steuereinrichtung 3 zugewandten Ende der Betätigungsvorrichtung 1 ausschiebbar und verschiebt einen Ventilschieber 68. Dieser ist durch wenigstens eine Rückstellfeder 67 auf der der Betätigungsvorrichtung 1 gegenüberliegenden Seite der Steuereinrichtung 3 in Rückstellrichtung 74 kraftbeaufschlagt.

Das Vorrichtungsgehäuse 4 ist mittels Befestigungseinrichtungen 64 an einem Anflanschgehäuse 69 der Steuereinrichtung 3 lösbar befestigt. Innerhalb des Anflanschgehäuses 69 sind Betätigungselemente 7 und Ventilschieber 68 in Verstellrichtungen 2 verschiebbar. In der Ausschubstellung 70 des Betätigungselements 7 ist der Ventilschieber 68 soweit in der Steuereinrichtung 3 verschoben, dass eine im Ventilschieber 68 ausgebildete Schieberbohrung 73 eine Ventilbohrung 72 freigibt. In der Einziehstellung 71 schließt der Ventilschieber 68 die Ventilbohrung 72.

An dem der Steuereinrichtung 3 gegenüberliegenden Ende des Vorrichtungsgehäuses 4 ist zur Steuerung der Betätigungsvorrichtung sowie zur Übermittlung von Daten ein Kabel 79 angeschlossen.

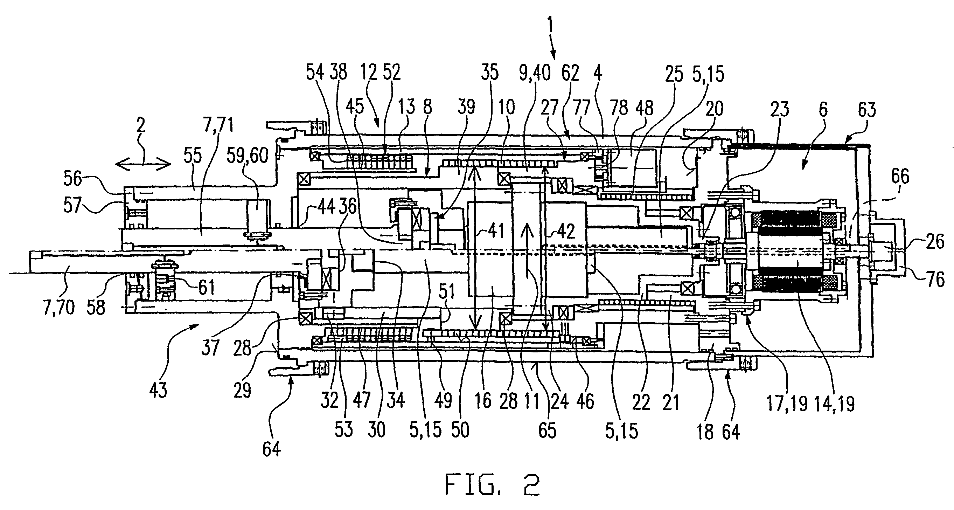

In Figur 2 ist ein Längsschnitt durch die Betätigungsvorrichtung 1 dargestellt. In einer oberen Hälfte nach Figur 2 ist das Betätigungselement 7 in seiner Einziehstellung 71 und in einer von dieser oberen Hälfte durch die axiale Richtung 66 getrennten unteren Hälfte ist das Betätigungselement 7 in seiner Ausschubstellung 70 dargestellt, siehe auch Figur 1.

Das Vorrichtungsgehäuse 4 ist zweiteilig aus Gehäuseteilen 62 und 63 gebildet. Das Gehäuseteil 63 bildet eine Gehäusekappe, die mittels der Befestigungseinrichtung 64 an dem anderen Gehäuseteil 62 lösbar befestigt ist Eine entsprechende Befestigungseinrichtung 64 ist am der Gehäusekappe 63 gegenüberliegenden Auslassende 29 des Vorrichtungsgehäuses 4 angeordnet.

In der Gehäusekappe 63 ist als Teil einer Motor-Getriebe-Einheit 19 ein elektrischer Motor 14 angeordnet. An einem Ende ist ein Positionssensor 26 zur Ermittlung der Längsposition der Spindel 5 montiert. Der Positionssensor 26 steht gegenüberliegend zum Auslassende 29 des Vorrichtungsgehäuses 4 aus der Gehäusekappe 63 vor und ist in einer mit der Gehäusekappe 63 lösbar verbundenen Sensorkappe 76 angeordnet.

Der elektrische Motor 14 ist mit einer Getriebeeinrichtung 17 als weiterem Teil der Motor-Getriebe-Einheit verbunden, die beispielsweise ein sogenanntes Flex-Spline-Getriebe ohne klassische Zahnräder sein kann. Die Motor-Getriebe-Einheit 19 ist an einer sich quer im Vorrichtungsgehäuse 4 erstreckenden Ringscheibe 18 befestigt, wobei die Getriebeeinrichtung 17 in einer entsprechenden mittigen Ringöffnung dieser Ringscheibe zumindest teilweise eingesetzt ist.

Auf der dem elektrischen Motor 14 abgewandten Seite 20 der Ringscheibe 18 weist diese einen Ringfortsatz 21 auf, in dem eine Verbindungshülse 22 drehbar gelagert ist. Die Verbindungshülse 22 ist drehbar mit der Getriebeeinrichtung 17 an ihrem Ende 23 verbunden. An ihrem gegenüberliegenden Ende 24 ist sie an einer Kugelmutter 16 lösbar befestigt. In der Kugelmutter 16 ist die Drehspindel als Kugelumlaufspindel 15 in axialer Richtung 66 bzw. in Verstellrichtung 2 verschiebar gelagert. Die Verbindungshülse 22 weist in Richtung Kugelmutter 16 verschiedene Abschnitte mit zunehmendem Durchmesser auf, wobei sie an ihrem Ende 23 einen Abschnitt mit geringstem Durchmesser aufweist, der an der Getriebeeinrichtung 17 befestigt ist. Kugelmutter 16, Drehspindel 15 und Motor-Getriebe-Einheit 19 bilden eine Vorschubeinrichtung 6 für das Betätigungselement 7.

In der Verbindungshülse 22 ist die Drehspindel 5 angeordnet, wobei sie in Figur 2 in einer maximal in die Verbindungshülse 22 eingefahrene Position in der oberen Hälfte und in der unteren Hälfte in der maximal aus der Verbindungshülse 22 ausgefahrenen Position dargestellt ist.

Zwischen Verbindungshülse 22 und Ringfortsatz 21 ist auf deren Außenseiten eine Wickelfeder 25 dargestellt. Diese ermöglicht eine Drehung der Verbindungshülse 22 in Vorschubdrehrichtung 11, während eine Drehung in umgekehrter Richtung verhindert ist.

Zwischen Verbindungshülse 22 und Ringfortsatz 21 ist ein Drehlager 28 angeordnet, wobei dieses Drehlager sowie alle weiteren Drehlager in üblicher Weise durch ein Quadrat oder Rechteck mit eingezeichneten Diagonalen dargestellt ist.

Die Verbindungshülse 22 ist von einer Mantelhülse 27 umgeben, die an einem ihrer Enden drehfest an der Ringscheibe 18 lösbar befestigt ist. An ihrem gegenüberliegenden Ende weist die Mantelhülse 27 einen Endabschnitt 40 auf, der einen die Kugelmutter 16 umgebenden Ringflansch 9 bildet. An den Ringflansch 9 schließt sich in Richtung Auslassende 29 des Vorrichtungsgehäuses 4 eine Drehhülse 8 an, die an ihrem dem Ringflansch 9 zuweisenden Ende einen Endabschnitt 39 aufweist. Endabschnitt 39 und Ringflansch 9 weisen gleiche Außendurchmesser 41 bzw. 42 auf. Auf den Endabschnitt 39 bzw. auf Ringflansch 9 ist eine Wickelfeder 10 aufgewickelt, die Mantelhülse 27 und Drehhülse 8 bei Drehung der Kugelmutter 16 in Vorschubdrehrichtung 11 drehfest miteinander verbindet. Die Drehhülse 8 erstreckt sich bis zu einem in der Auslassöffnung 29 des Vorrichtungsgehäuses 4 eingesetzten Gehäusedeckel 43. Dieser weist auf seiner Innenseite eine Einsteckhülse 45 auf, die die Drehhülse umgibt und innerhalb der die Drehhülse über Drehlager 28 drehbar gelagert ist. Über weitere Drehlager 28 am anderen Ende der Drehhülse 8 ist diese am Ringflansch 9 der Mantelhülse 27 drehbar gelagert. Der Gehäusedeckel 43 weist eine mittige Führungsbohrung 44 auf, durch die das Betätigungselement 7 hindurchgeführt ist. An einem der Drehspindel 5 zugeordneten Ende 38 des Betätigungselements 7 ist dieses mit einer Drehhalterung 37 verbunden. Die Drehhalterung 37 ist am Ende 34 der Drehspindel 5 als Teil eines Spindelkopfes 35 lösbar befestigt, an dessen der Drehspindel gegenüberliegenden Seite 36 sie gelagert ist. Von der Drehhalterung 37 stehen radial nach außen zwei Führungsfahnen 32, 33 einander gegenüberliegend ab, die in entsprechende Führungsschlitze 30, 31 in der Drehhülse 8 eingreifen und in diesen Führungsschlitzen in axialer Richtung 66 geführt sind. Durch den Eingriff von Führungsfahnen und Führungsschlitzen sind Drehhalterung 37 und damit Drehspindel 5 und Drehhülse 8 drehfest miteinander verbunden.

Auf der der Einsteckhülse 45 gegenüberliegenden Außenseite des Gehäusedeckels 43 weist dieser eine Außenhülse 55 auf, die das Betätigungselement 7 umgibt. An ihrem freien Ende 56 ist die Außenhülse 55 durch einen Enddeckel 57 verschlossen. Dieser weist eine Auslassbohrung 58 auf, durch die das Betätigungselement 7 ausschiebbar ist. In der Einziehstellung 71 schließt das freie Ende des Betätigungselements 7 im wesentlichen mündig mit einer Außenseite des Enddeckels 57 ab. Innerhalb der Außenhülse 55 ist ein nicht dargestelltes Fluid eingefüllt. Dieses dient zur Dämpfung einer Bewegung des Betätigungselements 7, wobei von diesem radial nach außen eine Verdrängerscheibe 60 als Verdrängerelement 59 absteht. In der Verdrängerscheibe 60 sind Fluiddurchlassbohrungen 61 angeordnet, die insbesondere die Bewegung des Betätigungselements 7 in Richtung Ausschubstellung 70 dämpfen.

Die Wickelfeder 10 ist an einem ihrer Wickelenden 51 mit einer Mitnehmereinrichtung 49 in Kontakt, die an einer Innenseite 50 einer Spannhülse 13 ausgebildet ist. Die Spannhülse 13 ist über Drehlager 28 an ihren Enden einerseits auf der Außenseite 47 der Einsteckhülse 45 und andererseits der Außenseite 46 der Mantelhülse 27 drehbar gelagert. An ihrem der Mantelhülse 27 zugeordneten Ende weist die Spannhülse 13 einen radial nach innen weisenden Endflansch 77 mit einer Innenverzahnung auf. Diese ist mit einem Zahnrad 78 in Eingriff, welches von einem Spannmotor 48 gedreht wird. Der Spannmotor 48 ist zwischen Mantelhülse 27 und Vorrichtungsgehäuse 4 angeordnet und ist getrennt vom elektrischen Motor 14 zur Drehung der Spannhülse 13 steuerbar.

Mit der Einsteckhülse 45 ist an einem ihrer Enden eine als Torsionsfeder ausgebildete Rückstellfeder 52 in Verbindung. Ihr anderes Wickelende 54 ist mit einer Mitnehmereinrichtung 53 in Kontakt, die von der Innenseite 50 der Spannhülse 13 absteht. Bei Drehung der Spannhülse 13 durch Spannmotor 48 wird die Rückstellfeder 52 gespannt und liefert eine Rückstellkraft für die Spannhülse 13.

Spannmotor 48, Spahnhülse 13, Wickelfeder 10 und Rückstellfeder 52 bilden eine Notlöseeinrichtung 12, die bei Ausfall einer elektrischen Versorgung der Betätigungsvorrichtung 1 eine selbsttätige bzw. automatische Rückstellung des Betätigungselements 7 in Einziehstellung 71 bewirkt.

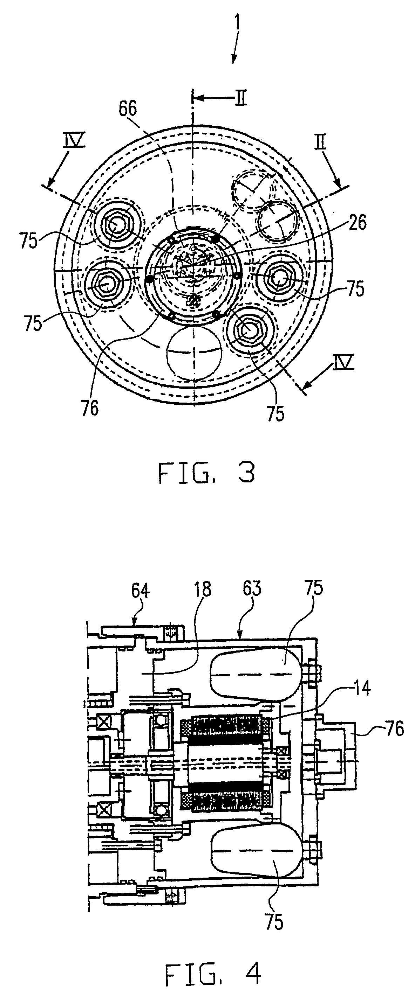

In Figur 3 ist eine Vorderansicht der Betätigungsvorrichtung 1 aus Figur 2 in Richtung auf Gehäusekappe 63 und Sensorkappe 76 dargestellt. Figur 2 entspricht einem Schnitt entlang der Linie II-II aus Figur 3. Konzentrisch um den Positionssensor 26 sind nach Figur 3 vier Kompensatoren 75 angeordnet, die in Figur 4 näher dargestellt sind. Figur 4 entspricht einem Schnitt entlang der Linie IV-IV aus Figur 3.

Die Kompensatoren 75 sind in der Gehäusekappe 63 jeweils radial außen relativ zum elektrischen Motor 14 angeordnet. Die Kompensatoren dienen dem Volumenund Druckausgleich aufgrund der vollständigen Ölfüllung der Betätigungsvorrichtung und damit zur Kompensierung von Volumenänderungen während der Betätigung und dem Temperaturwechsel.

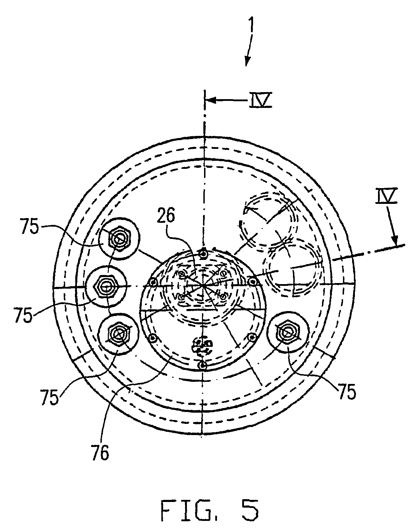

In Figur 5 ist eine Ansicht analog zu Figur 3 auf ein zweites Ausführungsbeispiel einer erfindungsgemäßen Betätigungsvorrichtung 1 dargestellt. Vier Kompensatoren 75 sind konzentrisch zum Positionssensor 26 angeordnet.

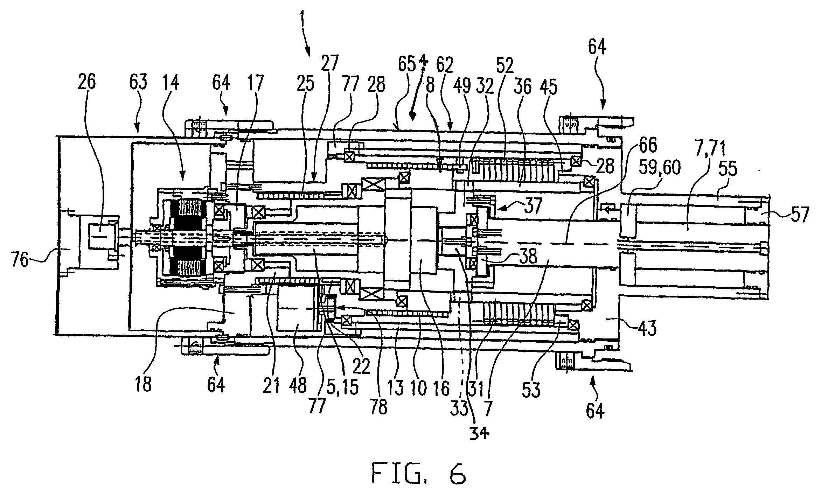

Figur 6 entspricht einem Schnitt entlang der Linie VI-VI aus Figur 5. Zur Beschreibung des zweiten Ausführungsbeispiels der Betätigungsvorrichtung 1 wird auf Figur 2 verwiesen, wobei gleiche Teile in beiden Figuren durch gleiche Bezugszeichen gekennzeichnet sind und nur noch teilweise erwähnt werden.

Das zweite Ausführungsbeispiel der Betätigungsvorrichtung 1 unterscheidet sich im wesentlichen vom ersten darin, dass die Einsteckhülse 45 sich weniger weit in das Vorrichtungsgehäuse 4 erstreckt. Ein weiterer Unterschied ist, dass der Positionssensor 26 in der Gehäusekappe 63 versenkt angeordnet ist und die den Positionssensor aufnehmende Öffnung durch eine entsprechende Sensorkappe 76 bündig zur Außenseite der Gehäusekappe 63 verschließbar ist.

Weiterhin ist der elektrische Motor 14 kleiner ausgebildet, da das zweite Ausführungsbeispiel der erfindungsgemäßen Betätigungsvorrichtung 1 für geringere Leistungen ausgelegt ist.

In Figur 6 ist das Betätigungselement 7 nur in seiner Einziehstellung 71 dargestellt, in der es, siehe auch Figur 2, im wesentlichen bündig mit einer Außenseite des Enddeckels 57 abschließt.

Sonst weist beispielsweise das Vorrichtungsgehäuse 4 analog zu Figur 2 auf seiner Außenseite 65 entsprechende Befestigungseinrichtungen 64 sowohl zur Verbindung von Gehäusekappe 63 und weiterem Gehäuseteil 62 als auch zur Verbindung von Gehäuseteil 62 mit beispielsweise dem Anflanschgehäuse 69, siehe Figur 1 auf.

Im folgenden wird die Funktionsweise der erfindungsgemäßen Betätigungsvorrichtung 1 anhand der beigefügten Figuren kurz erläutert.

Zum Abschieben des Betätigungselements 7 in Verstellrichtung 2 wird der elektrische Motor 14 betätigt, der über die Getriebeeinrichtung 17 die Verbindungshülse 22 und die mit dieser drehfest verbundene Kugelmutter 16 dreht. Bei Drehung der Kugelmutter wird die Drehspindel 5 bzw. Kugelumlaufspindel 15 in axialer Richtung bewegt, wobei sie über die Drehhalterung 37 an ihrem Ende 34 das Betätigungselement 7 in Richtung Ausschubstellung 70 bewegt.

Gleichzeitig hierzu oder auch zeitlich vorher wird durch den Spannmotor 48 über Zahnrad 78 die Spannhülse 13 gedreht. Durch die entsprechenden Mitnehmereinrichtungen 49, 53 werden sowohl die Wickelfeder 10 entspannt und die Rückstellfeder 52 gespannt. Das heißt, die Wickelfeder 10 umschlingt durch Eigenspannung die Drehhülse 8 und Mantelhülse 27, wodurch diese drehfest miteinander verbunden sind. Die Rückstellfeder 52 wird bei Drehung der Spannhülse 13 gespannt.

Durch die Verbindung zwischen Drehhülse 8 und Mantelhülse 27 ist eine Rückdrehung der Kugelspindel 5 unterbunden. Das entsprechende Rückdrehmoment wird über die Mantelhülse 27 auf das Vorrichtungsgehäuse 4 übertragen.

Wird der als Schrittmotor ausgebildete Spannmotor 48 mit einem entsprechenden Haltestrom betrieben, bleibt dieser in seiner Position, wie auch Spannhülse 13. In der Rückstellfeder 52 ist Energie gespeichert, die gegen das Haltemoment des Spannmotors 48 die Spannhülse 13 zurückzudrehen versucht.

In der Ausschubstellung 70 des Betätigungselements 7 ist die Ventilbohrung 72, siehe Figur 1, geöffnet und Gas-/Öl-Förderung oder dergleichen kann stattfinden.

Die entsprechende Längsbewegung der Drehspindel 5 wird durch den Positionssensor 26 ermittelt.

Soll die Ventilbohrung 72 wieder geschlossen werden, wird das Haltemoment des Spannmotors 48 durch entsprechende Ansteuerung abgebaut. Darauffolgend wird die Wickelfeder 10 geöffnet, so dass durch die Rückstellkraft der Rückstellfeder 52 die Drehhülse 8 sich relativ zur Mantelhülse 27 in entgegengesetzter Richtung drehen kann. Durch die drehfeste Verbindung von Drehhülse 8 zur Drehspindel 5, siehe Führungsschlitze 30, 31 und Führungsfahnen 32, 33, kann entsprechend die Drehspindel durch die Kugelmutter 16 in Richtung elektrischer Motor 14 zurückdrehen, wobei das mit der Drehspindel verbundene Betätigungselement 7 zurück in die Einziehstellung 71 verschoben wird. Dabei spielt die durch die Rückstellfeder 67, siehe Figur 1, ausgeübte Rückstellkraft auf Betätigungselement 7 eine große Rolle, da durch diese Kraft im wesentlichen die Rückstellung sowohl von Betätigungselement 7 als auch von Drehspindel 5 erfolgt. Die Rückstellfeder 52 dient im wesentlichen nur zur Rückdrehung der Spannhülse 13 und zu einem entsprechenden Lösen der Wickelfeder 10.

Im Falle eines Stromausfalls, wird ebenfalls das Haltemoment im Spannmotor 48 abgebaut, so dass ein Notschließen der Betätigungsvorrichtung 1 aufgrund der aus Rückstellfeder 52 und Wickelfeder 10 sowie Spannhülse 13 gebildeten Notlöseeinrichtung 12 stattfindet. Wie bereits vorangehend beschrieben, dreht die Rücksteflfeder 52 die Spannhülse 13 zurück, wodurch die Wickelfeder 10 aus ihrer Umschlingung gelöst wird und anschließend die Drehhülse 8 sich relativ zur Mantelhülse 27 drehen kann. Die übrige Schließfunktion erfolgt analog zum normalen Schließen der Betätigungsvorrichtung 1.

Es ist somit möglich, ein entsprechendes Ventil ohne Steuerung von außen und versorgen mit elektrischer Energie in die Schließposition zu fahren.

Die beschriebene Betätigungsvorrichtung 1 ist insbesondere in der Öl-, Gas-, Raffinerie- oder Chemie-Industrie einsetzbar, wo ferngesteuert eine Betätigung einer Drosseleinrichtung, eines Ventils oder dergleichen an entlegenen und/oder gefährdeten Lokalitäten erwünscht ist. Die erfindungsgemäße Notlöseeinrichtung 12 ist nicht nur mit dem dargestellten Flex-Spline-Getriebe ohne klassische Zahnräder sondern auch bei anderen existierenden Antrieben mit Serienmotoren und Standard-Kupplungen-Brems-Kombination einsetzbar.

## Patentansprüche

1. Betätigungsvorrichtung (1) zur Verstellung einer entgegengesetzt zur Verstellrichtung (2) kraftbeaufschlagten Steuereinrichtung (3), wobei die Betätigungsvorrichtung (1) ein in einem Vorrichtungsgehäuse (4) durch eine Drehspindel (5) einer Vorschubeinrichtung (6) in Verstellrichtung (2) axial verschiebbares Betätigungselement (7) aufweist, welche Drehspindel (5) mit einer in dem Vorrichtungsgehäuse (4) drehbar gelagerten und die Drehspindel (5) umgebenden Drehhülse (8) drehfest verbunden ist, welche relativ zu einem mit dem Vorrichtungsgehäuse (4) drehfest verbundenen Ringflansch (9) mittels einer Wickelfeder (10) entgegengesetzt zu einer Vorschubdrehrichtung (11) der Drehspindel festgelegt ist, wobei der Wickelfeder (10) eine Notlöseeinrichtung (12) zur Rückstellung des Betätigungselements (7) entgegengesetzt zur Verstellrichtung (2) zugeordnet ist,
**dadurch gekennzeichnet,**
**dass** die Notlöseeinrichtung (12) eine zwischen einer Spann- und einer Entspannstellung verdrehbare, in Richtung ihrer Entspannstellung kraftbeaufschlagte Spannhülse (13) für die Wickelfeder (10) aufweist, die in Spannstellung lösbar gehalten ist.

2. Betätigungsvorrichtung nach Anspruch 1,
**dadurch gekennzeichnet,**
**dass** die Vorschubeinrichtung (6) einen elektrischen Motor (14) zur Drehung der Drehspindel (5) aufweist.

3. Betätigungsvorrichtung nach Anspruch 2,
**dadurch gekennzeichnet,**
**dass** die Drehspindel (5) als Kugelumlaufspindel (15) ausgebildet und der elektrische Motor (14) mit einer Kugelmutter (16) antriebsverbunden ist, in welcher die Drehspindel gelagert ist.

4. Betätigungsvorrichtung nach Anspruch 2 oder 3,
**dadurch gekennzeichnet,**
**dass** zwischen elektrischem Motor (14) und Kugelmutter (16) eine Getriebeeinrichtung (17) angeordnet ist.

5. Betätigungsvorrichtung nach Anspruch 4,
**dadurch gekennzeichnet,**
**dass** elektrischer Motor (14) und Getriebeeinrichtung (17) eine an einer quer zum Vorrichtungsgehäuse (4) in diesem befestigten Ringscheibe (18) insbesondere lösbar befestigte Motor-Getriebe-Einheit (19) bilden.

6. Betätigungsvorrichtung nach Anspruch 5,
**dadurch gekennzeichnet,**
**dass** die Ringscheibe (18) auf ihrer der Kugelmutter (16) zuweisenden Seite (20) einen Ringfortsatz (21) aufweist, in dem eine Verbindungshülse (22) drehbar gelagert ist, welche an einem ihrer Enden (23) mit der Motor-Getriebe-Einheit (19) und an ihrem anderen Ende (24) mit der Kugelmutter (16) lösbar verbunden ist.

7. Betätigungsvorrichtung nach Anspruch 6,
**dadurch gekennzeichnet,**
**dass** zwischen Verbindungshülse (22) und Ringfortsatz (21) eine weitere Wickelfeder (25) angeordnet ist.

8. Betätigungsvorrichtung nach wenigstens einem der vorangehenden Ansprüche,
**dadurch gekennzeichnet,**
**dass** der Vorschubeinrichtung (6), insbesondere dem elektrischen Motor (14) mit der Spindel (5, 15), ein Positionssensor (26) zugeordnet ist.

9. Betätigungsvorrichtung nach einem der vorangehenden Ansprüche 6 bis 8,
**dadurch gekennzeichnet,**
**dass** eine Mantelhülse (27) Ringfortsatz (21) und Verbindungshülse (22) umgibt und an der Ringscheibe (18) lösbar befestigt ist.

10. Betätigungsvorrichtung nach einem der vorangehenden Ansprüche 3 bis 9,
**dadurch gekennzeichnet,**
**dass** die Drehhülse (8) sich von im wesentlichen der Kugelmutter (16) bis zu einem dem elektrischen Motor (14) gegenüberliegenden Auslassende (29) des Vorrichtungsgehäuses (4) erstreckt, wobei wenigstens zwei Führungsschlitze (30, 31) in der Drehhülse (8) ausgebildet sind, in denen relativ zur Drehspindel (5, 15) radial abstehende Führungsfahnen (32, 33) in axialer Richtung (66) verschiebbar sind.

11. Betätigungsvorrichtung nach Anspruch 10,
**dadurch gekennzeichnet,**
**dass** die Führungsfahnen (32, 33) an einem an einem Ende (34) der Drehspindel (5) lösbar befestigten Spindelkopf (35) angeordnet sind.

12. Betätigungsvorrichtung nach wenigstens einem der vorangehenden Ansprüche,
**dadurch gekennzeichnet,**
**dass** der Spindelkopf (35) auf seiner der Drehspindel (5) abgewandten Seite (36) eine Drehhalterung (37) für ein Ende (38) des Betätigungselements (7) aufweist.

13. Betätigungsvorrichtung nach einem der vorangehenden Ansprüche 9 bis 12,
**dadurch gekennzeichnet,**
**dass** die Drehhülse (8) relativ zur Mantelhülse (27) drehbar ist und zwischen diesen die Wickelfeder (10) angeordnet ist.

14. Betätigungsvorrichtung nach einem der vorangehenden Ansprüche 9 bis 13,
**dadurch gekennzeichnet,**
**dass** Drehhülse (8) und Mantelhülse (27) auf einander zuweisende Endabschnitte (39, 40) mit im wesentlichen gleichen Außendurchmessern (41, 42) aufweisen, auf denen die Wickelfeder (10) aufgewickelt ist, wobei der Endabschnitt (39) der Führungshülse (28) der Ringflansch (9) ist.

15. Betätigungsvorrichtung nach einem der vorangehenden Ansprüche 10 bis 14,
**dadurch gekennzeichnet,**
**dass** ein Gehäusedeckel (43) mit einer Führungsbohrung (44) für das Betätigungselement (7) am Auslassende (29) des Vorrichtungsgehäuses (4) angeordnet ist.

16. Betätigungsvorrichtung nach Anspruch 15,
**dadurch gekennzeichnet,**
**dass** der Gehäusedeckel (43) zumindest eine in das Vorrichtungsgehäuse (4) vorstehende Einsteckhülse (45) aufweist, die die Drehhülse (8) umgibt und an welcher die Führungshülse (28) drehbar gelagert ist.

17. Betätigungsvorrichtung nach Anspruch 16,
**dadurch gekennzeichnet,**
**dass** an Außenseiten (46, 47) von Mantelhülse (27) und Einsteckhülse (45) die Spannhülse (13) drehbar gelagert ist.

18. Betätigungsvorrichtung nach wenigstens einem der vorangehenden Ansprüche,
**dadurch gekennzeichnet,**
**dass** die Spannhülse (13) mittels eines elektrischen Spannmotors (48), insbesondere eines Schrittmotors, drehbar ist.

19. Betätigungsvorrichtung nach wenigstens einem der vorangehenden Ansprüche,
**dadurch gekennzeichnet,**
**dass** eine Mitnehmereinrichtung (49) an insbesondere der Innenseite (50) der Spannhülse (13) ausgebildet ist, die mit einem Wickelende (51) der Wickelfeder (10) in Kontakt ist.

20. Betätigungsvorrichtung nach Anspruch 18 oder 19,
**dadurch gekennzeichnet,**
**dass** der Spannmotor (48) im Vorrichtungsgehäuse (4) seitlich neben der Mantelhülse (27) angeordnet ist.

21. Betätigungsvorrichtung nach wenigstens einem der vorangehenden Ansprüche,
**dadurch gekennzeichnet,**
**dass** eine Rückstellfeder (52) zur Kraftbeaufschlagung der Spannhülse (13) in Richtung Entspannstellung zwischen Spannhülse (13) und Vorrichtungsgehäuse (4) oder einem relativ zum Vorrichtungsgehäuse drehfesten Bauteil angeordnet ist.

22. Betätigungsvorrichtung nach Anspruch 21,
**dadurch gekennzeichnet,**
**dass** das drehfeste Bauteil der Gehäusedeckel (43) und insbesondere die Einsteckhülse (45) ist.

23. Betätigungsvorrichtung nach Anspruch 21 oder 22,
**dadurch gekennzeichnet,**
**dass** eine weitere Mitnehmereinrichtung (53) von der Innenseite (50) der Spannhülse (13) im wesentlichen radial nach innen absteht, die mit einem Wickelende (54) der als Torsionsfeder ausgebildeten Rückstellfeder (52) in Kontakt ist.

24. Betätigungsvorrichtung nach einem der vorangehenden Ansprüche 16 bis 23,
**dadurch gekennzeichnet,**
**dass** der Gehäusedeckel (43) eine der Einsteckhülse (45) gegenüberliegende Außenhülse (55) aufweist, die das Betätigungselement (7) umgibt.

25. Betätigungsvorrichtung nach Anspruch 24,
**dadurch gekennzeichnet,**
**dass** die Außenhülse (55) an ihrem freien Ende (56) einen insbesondere lösbaren Enddeckel (57) mit Auslassbohrung (58) für das im wesentlichen stabförmige Betätigungselement (7) aufweist.

26. Betätigungsvorrichtung nach Anspruch 24 oder 25,
**dadurch gekennzeichnet,**
**dass** die Außenhülse (55) mit einem Fluid zumindest teilweise gefüllt ist und vom Betätigungselement (7) wenigstens ein Verdrängerelement (59) innerhalb der Außenhülse (55) absteht.

27. Betätigungsvorrichtung nach Anspruch 26,
**dadurch gekennzeichnet,**
**dass** das Verdrängerelement (59) als radial auswärts vom Betätigungselement (7) abstehende Verdrängerscheibe (60) mit wenigstens einer Fluiddurchlassbohrung (61) ausgebildet ist.

28. Betätigungsvorrichtung nach wenigstens einem der vorangehenden Ansprüche,
**dadurch gekennzeichnet,**
**dass** das Vorrichtungsgehäuse (4) aus wenigstens zwei miteinander lösbar verbundenen Gehäuseteilen (62, 63) zusammengesetzt ist.

29. Betätigungsvorrichtung nach Anspruch 28,
**dadurch gekennzeichnet,**
**dass** ein Gehäuseteil (63) im wesentlichen als Gehäuseendkappe ausgebildet ist, in der die Motor-Getriebe-Einheit (19) enthalten ist.

30. Betätigungsvorrichtung nach einem der vorangehenden Ansprüche 15 bis 29,
**dadurch gekennzeichnet,**
**dass** eine Befestigungseinrichtung (64) an einer Außenseite (65) des Vorrichtungsgehäuses (4) im Bereich des Gehäusedeckels (43) zur lösbaren Befestigung an der Steuereinrichtung (3) angeordnet ist.

## Claims

1. Actuating device (1) for the displacement of a control device (3) which is subjected to a force in the direction opposite the direction of displacement (2), wherein the actuating device (1) comprises an actuating element (7) which is axially slidable in the direction of displacement (2) in a device housing (4) by a rotary spindle (5) of an advance mechanism (6), which rotary spindle (5) is non-rotatably connected to a rotary sleeve (8) which is mounted rotatably in the device housing (4) and surrounds the rotary spindle (5) and which is fixed relative to a ring flange (9), which is non-rotatably connected to the device housing (4), by means of a volute spring (10) in the direction opposite a direction of advance rotation (11) of the rotary spindle, wherein associated with the volute spring (10) is an emergency release device (12) for return of the actuating element (7) in the direction opposite the direction of displacement (2), **characterised in that** the emergency release device (12) comprises a clamping sleeve (13) for the volute spring (10), which sleeve (13) is rotatable between a clamping and a release position and subjected to a force in the direction of its release position and which is held releasably in the clamping position.

2. Actuating device according to claim 1, **characterised in that** the advance mechanism (6) comprises an electric motor (14) for rotation of the rotary spindle (5).

3. Actuating device according to claim 2, **characterised in that** the rotary spindle (5) is designed as a recirculating ball spindle (15) and the electric motor (14) is connected for driving purposes to a ball nut (16) in which the rotary spindle is mounted.

4. Actuating device according to claim 2 or 3, **characterised in that** between electric motor (14) and ball nut (16) is arranged a gear mechanism (17).

5. Actuating device according to claim 4, **characterised in that** electric motor (14) and gear mechanism (17) form a motor and gear unit (19) which is in particular releasably attached to a ring plate (18) mounted in the device housing (4) transversely thereto.

6. Actuating device according to claim 5, **characterised in that** the ring plate (18) on its side (20) facing towards the ball nut (16) comprises a ring extension (21) in which is rotatably mounted a connecting sleeve (22) which is releasably connected to the motor and gear unit (19) at one end (23) and to the ball nut (16) at the other end (24).

7. Actuating device according to claim 6, **characterised in that** between connecting sleeve (22) and ring extension (21) is arranged an additional volute spring (25).

8. Actuating device according to one or more of the preceding claims, **characterised in that** associated with the advance mechanism (6), in particular the electric motor (14) with the spindle (5, 15), is a position sensor (26).

9. Actuating device according to any of the preceding claims 6 to 8, **characterised in that** a casing sleeve (27) surrounds ring extension (21) and connecting sleeve (22) and is releasably attached to the ring plate (18).

10. Actuating device according to any of the preceding claims 3 to 9, **characterised in that** the rotary sleeve (8) extends essentially from the ball nut (16) to an outlet end (29) of the device housing (4) opposite the electric motor (14), wherein at least two guide slots (30, 31) are formed in the rotary sleeve (8), in which guide lugs (32, 33) projecting radially relative to the rotary spindle (5, 15) are displaceable in an axial direction (66).

11. Actuating device according to claim 10, **characterised in that** the guide lugs (32, 33) are arranged on a spindle head (35) releasably attached to one end (34) of the rotary spindle (5).

12. Actuating device according to one or more of the preceding claims, **characterised in that** the spindle head (35) on its side (36) facing away from the rotary spindle (5) comprises a rotary support (37) for one end (38) of the actuating element (7).

13. Actuating device according to any of the preceding claims 9 to 12, **characterised in that** the rotary sleeve (8) is rotatable relative to the casing sleeve (27) and between them is arranged the volute spring (10).

14. Actuating device according to any of the preceding claims 9 to 13, **characterised in that** rotary sleeve (8) and casing sleeve (27) comprise end sections (39, 40) facing towards each other and having essentially the same outside diameters (41, 42), on which the volute spring (10) is wound, wherein the end section (39) of the guide sleeve (28) is the ring flange (9).

15. Actuating device according to any of the preceding claims 10 to 14, **characterised in that** a housing cover (43) with a guide bore (44) for the actuating element (7) is arranged at the outlet end (29) of the device housing (4).

16. Actuating device according to claim 15, **characterised in that** the housing cover (43) comprises at least one insertion sleeve (45) which protrudes into the device housing (4) and surrounds the rotary sleeve (8) and on which the guide sleeve (28) is mounted rotatably.

17. Actuating device according to claim 16, **characterised in that** the clamping sleeve (13) is mounted rotatably on the outsides (46, 47) of casing sleeve (27) and insertion sleeve (45).

18. Actuating device according to one or more of the preceding claims, **characterised in that** the clamping sleeve (13) is rotatable by means of an electric clamping motor (48), in particular a stepping motor.

19. Actuating device according to one or more of the preceding claims, **characterised in that** a driver device (49) is formed in particular on the inside (50) of the clamping sleeve (13), which is in contact with one winding end (51) of the volute spring (10).

20. Actuating device according to any of the preceding claims 18 or 19, **characterised in that** the clamping motor (48) is arranged in the device housing (4) laterally adjacent to the casing sleeve (27).

21. Actuating device according to one or more of the preceding claims, **characterised in that** a return spring (52) for subjecting the clamping sleeve (13) to a force in the direction of the release position is arranged between the clamping sleeve (13) and the device housing (4) or a component which is non-rotatable relative to the device housing.

22. Actuating device according to claim 21, **characterised in that** the non-rotatable component is the housing cover (43) and in particular the insertion sleeve (45).

23. Actuating device according to claim 21 or 22, **characterised in that** an additional driver device (53) projects essentially radially inwards from the inside (50) of the clamping sleeve (13), which is in contact with one winding end (54) of the return spring (52) designed as a torsion spring.

24. Actuating device according to any of the preceding claims 16 to 23, **characterised in that** the housing cover (43) comprises an outer sleeve (55) which is opposite the insertion sleeve (45) and which surrounds the actuating element (7).

25. Actuating device according to claim 24, **characterised in that** the outer sleeve (55) comprises at its free end (56) in particular a releasable end cover (57) with outlet bore (58) for the essentially rod-shaped actuating element (7).

26. Actuating device according to claim 24 or 25, **characterised in that** the outer sleeve (55) is at least partially filled with a fluid and at least one positive-displacement element (59) projects from the actuating element (7) within the outer sleeve (55).

27. Actuating device according to claim 26, **characterised in that** the positive-displacement element (59) is designed as a positive-displacement plate (60) projecting radially outwards from the actuating element (7) and having at least one fluid through-bore (61).

28. Actuating device according to one or more of the preceding claims, **characterised in that** the device housing (4) is composed of at least two housing portions (62, 63) releasably connected to each other.

29. Actuating device according to claim 28, **characterised in that** one housing portion (63) is essentially designed as a housing end cap in which is contained the motor and gear unit (19).

30. Actuating device according to any of the preceding claims 15 to 29, **characterised in that** a fastening device (64) is arranged on an outside (65) of the device housing (4) in the region of the housing cover (43) for releasable attachment to the control device (3).

## Revendications

1. Dispositif d'actionnement (1) pour déplacer un dispositif de commande (3) sollicité par une force opposée au sens de déplacement (2), dans lequel le dispositif d'actionnement (1) présente un élément d'actionnement (7) déplaçable axialement dans le sens de déplacement (2) dans un boîtier de dispositif (4) par une broche tournante (5) d'un dispositif d'avancement (6), ladite broche tournante (5) étant reliée, solidaire en rotation, à une douille tournante (8) montée à rotation dans le boîtier de dispositif (4) et entourant la broche tournante (5), ladite douille étant localisée, par rapport à une bride annulaire (9) reliée au boîtier de dispositif (4), solidaire en rotation, au moyen d'un ressort spiral (10), à l'opposé d'un sens de rotation d'avancement (11) de la broche tournante, un dispositif de dégagement d'urgence (12) étant affecté au ressort spiral (10) pour rappeler l'élément d'actionnement (7) à l'opposé du sens de déplacement (2),
**caractérisé en ce que**
le dispositif de dégagement d'urgence (12) présente, pour le ressort spiral (10), une douille de serrage (13) qui peut tourner entre une position de serrage et une position de desserrage, qui est sollicitée par une force dans le sens de sa position de desserrage et qui est maintenue dans la position de serrage de manière amovible.

2. Dispositif d'actionnement selon la revendication 1,
**caractérisé en ce que**
le dispositif d'avancement (6) présente un moteur électrique (14) pour faire tourner la broche tournante (5).

3. Dispositif d'actionnement selon la revendication 2,
**caractérisé en ce que**
la broche tournante (5) se présente sous la forme d'une vis à circulation de billes (15) et le moteur électrique (14) est relié à un écrou à billes (16) qu'il entraîne et dans lequel la broche tournante est montée.

4. Dispositif d'actionnement selon la revendication 2 ou 3,
**caractérisé en ce que**
un dispositif de transmission (17) est aménagé entre le moteur électrique (14) et l'écrou à billes (16).

5. Dispositif d'actionnement selon la revendication 4,
**caractérisé en ce que**
le moteur électrique (14) et le dispositif de transmission (17) forment une unité moteur-transmission (19) en particulier fixée de manière amovible sur un disque annulaire (18) fixé transversalement au boîtier de dispositif (4) dans celui-ci.

6. Dispositif d'actionnement selon la revendication 5,
**caractérisé en ce que**
le disque annulaire (18) présente sur son côté (20) tourné vers l'écrou à billes (16), un prolongement annulaire (21) dans lequel est montée à rotation une douille de liaison (22) qui est reliée de manière amovible, sur l'une de ses extrémités (23), à l'unité moteur-transmission (19) et, à son autre extrémité (24), à l'écrou à billes (16).

7. Dispositif d'actionnement selon la revendication 6,
**caractérisé en ce que**
un autre ressort spiral (25) est aménagé entre la douille de liaison (22) et le prolongement annulaire (21).

8. Dispositif d'actionnement selon au moins l'une quelconque des revendications précédentes,
**caractérisé en ce que**
un capteur de position (26) est affecté au dispositif d'avancement (6), en particulier au moteur électrique (14) au moyen de la broche (5, 15).

9. Dispositif d'actionnement selon l'une quelconque des revendications 6 à 8,
**caractérisé en ce que**
une douille enveloppante (27) entoure l'épaulement annulaire (21) et la douille de liaison (22) et est fixée de manière amovible au disque annulaire (18).

10. Dispositif d'actionnement selon l'une quelconque des revendications 3 à 9,
**caractérisé en ce que**
la douille tournante (8) s'étend sensiblement de l'écrou ) à billes (16) à une extrémité de sortie (29), opposée au moteur électrique (14), du boîtier de dispositif (4), la douille tournante (8) présentant au moins deux fentes de guidage (30, 31), dans lesquelles deux talons de guidage (32, 33) dépassant radialement de la broche tournante (5, 15) peuvent être déplacées dans la direction axiale (66).

11. Dispositif d'actionnement selon la revendication 10,
**caractérisé en ce que**
les talons de guidage (32, 33) sont aménagés sur une tête de broche (35) fixée de manière amovible à une extrémité (34) de la broche tournante (5).

12. Dispositif d'actionnement selon au moins l'une quelconque des revendications précédentes,
**caractérisé en ce que**
la tête de broche (35) présente, sur son côté (36) opposé à la broche tournante (5), un support de rotation (37) pour une extrémité (38) de l'élément d'actionnement (7).

13. Dispositif d'actionnement selon l'une quelconque des revendications 9 à 12,
**caractérisé en ce que**
la douille tournante (8) est montée à rotation par rapport à la douille enveloppante (27) et le ressort spiral (10) aménagé entre eux.

14. Dispositif d'actionnement selon l'une quelconque des revendications 9 à 13,
**caractérisé en ce que**
la douille tournante (8) et la douille enveloppante (27) présentent, sur des sections d'extrémité (39, 40) tournées l'une vers l'autre, sensiblement les mêmes diamètres externes (41, 42), sur lesquels le ressort spiral (10) est enroulé, la section d'extrémité (39) de la douille de guidage (28) étant la bride annulaire (9).

15. Dispositif d'actionnement selon l'une quelconque des revendications 10 à 14,
**caractérisé en ce que**
un couvercle de boîtier (43) avec un trou de guidage (44) pour l'élément d'actionnement (7), est aménagé à l'extrémité de sortie (29) du boîtier de dispositif (4).

16. Dispositif d'actionnement selon la revendication 15,
**caractérisé en ce que**
le couvercle de boîtier (43) présente au moins une douille d'emboîtement (45) faisant saillie dans le boîtier de dispositif (4), qui entoure la douille tournante (8) et sur lequel la douille de guidage (28) est montée à rotation.

17. Dispositif d'actionnement selon la revendication 16,
**caractérisé en ce que**
la douille de serrage (13) est montée à rotation sur les côtés externes (46, 47) de la douille enveloppante (27) et de la douille d'emboîtement (45).

18. Dispositif d'actionnement selon au moins l'une quelconque des revendications précédentes,
**caractérisé en ce que**
la douille de serrage (13) peut tourner au moyen d'un moteur de serrage eléctrique (48), en particulier d'un moteur pas à pas.

19. Dispositif d'actionnement selon au moins l'une quelconque des revendications précédentes,
**caractérisé en ce que**
en particulier sur le côté interne (50) de la douille de serrage (13) est formé un dispositif d'entraînement (49) qui est en contact avec une extrémité spiralée (51) du ressort spiral (10).

20. Dispositif d'actionnement selon la revendication 18 ou 19,
**caractérisé en ce que**
le moteur de serrage (48) est aménagé dans le boîtier de dispositif (4) latéralement à côté de la douille enveloppante (27).

21. Dispositif d'actionnement selon au moins l'une quelconque des revendications précédentes,
**caractérisé en ce que**
un ressort de rappel (52) est aménagé pour appliquer une force à la douille de serrage (13) afin de la presser en direction de la position de desserrage entre la douille de serrage (13) et le boîtier de dispositif (4) ou un composant solidaire en rotation par rapport au boîtier de dispositif.

22. Dispositif d'actionnement selon la revendication 21,
**caractérisé en ce que**
le composant solidaire en rotation est le couvercle de boîtier (43) et, en particulier, la douille d'emboîtement (45).

23. Dispositif d'actionnement selon la revendication 21 ou 22,
**caractérisé en ce que**
un autre dispositif d'entraînement (53) fait saillie sensiblement radialement vers l'intérieur depuis le côté interne (50) de la douille de serrage (13) et est en contact avec une extrémité spiralée (54) du ressort de rappel (52) conformé en ressort de torsion.

24. Dispositif d'actionnement selon l'une quelconque des revendications 16 à 23,
**caractérisé en ce que**
le couvercle de boîtier (43) présente une douille externe (55) en regard de la douille d'emboîtement (45), qui entoure l'élément d'actionnement (7).

25. Dispositif d'actionnement selon la revendication 24,
**caractérisé en ce que**
la douille externe (55) présente, à son extrémité libre (56), un couvercle d'extrémité (57) en particulier amovible avec un trou de sortie (58) pour l'élément d'actionnement (7) sensiblement en forme de tige.

26. Dispositif d'actionnement selon la revendication 24 ou 25,
**caractérisé en ce que**
la douille externe (55) est au moins partiellement remplie d'un fluide et au moins un élément de déplacement dépasse de l'élément d'actionnement (7) à l'intérieur de la douille externe (55).

27. Dispositif d'actionnement selon la revendication 26,
**caractérisé en ce que**
l'élément de déplacement (59) se présente sous la forme d'un disque de déplacement (60) dépassant radialement vers l'extérieur à partir de l'élément d'actionnement (7) avec au moins un trou de passage de fluide (61).

28. Dispositif d'actionnement selon au moins l'une quelconque des revendications précédentes,
**caractérisé en ce que**
le boîtier de dispositif (4) est composé d'au moins deux parties de boîtier (62, 63) qui sont reliées l'une à l'autre de manière amovible.

29. Dispositif d'actionnement selon la revendication 28,
**caractérisé en ce que**
une partie de boîtier (63) est sensiblement conformée en coiffe d'extrémité de boîtier, qui contient l'unité moteur-transmission (19).

30. Dispositif d'actionnement selon l'une quelconque des revendications 15 à 29,
**caractérisé en ce que**
un dispositif de fixation (64) disposé sur un côté extérieur (65) du boîtier de dispositif (4) est aménagé dans la zone du couvercle de boîtier (43) pour ménager une fixation amovible sur le dispositif de commande (3).
